# EUROPEAN PATENT APPLICATION

(11) **EP 4 344 115 A1**
(43) Date of publication of application: **27.03.2024**
(21) Application number: 22824155.0
(22) Date of filing: 13.06.2022
(51) Int. Cl.: H04L 5/00, H04W 24/02

(54) **MULTI-LINK COMMUNICATION-BASED PROBE REQUEST METHOD AND APPARATUS**

(30) Priority: 15.06.2021 CN 202110662271
(71) Applicant: Huawei Technologies Co., Ltd., Longgang Shenzhen, Guangdong 518129 (CN)
(72) Inventor: LI, Yiqing, Shenzhen, Guangdong 518129 (CN); GUO, Yuchen, Shenzhen, Guangdong 518129 (CN); LI, Yunbo, Shenzhen, Guangdong 518129 (CN); GAN, Ming, Shenzhen, Guangdong 518129 (CN)
(74) Representative: MERH-IP Matias Erny Reichl Hoffmann Patentanwälte PartG mbB
(86) International application number: PCT/CN2022/098393
(87) International publication number: WO 2022/262675

(57) **Abstract**

This application discloses a multi-link communication-based probe request method and an apparatus, so that a transmitter device can clearly indicate, to a corresponding receiver device, that the transmitter device needs to request critical update-related element information. The method includes: The transmitter device generates a probe request frame, and sends the probe request frame. The probe request frame includes a probe request variant multi-link element (probe request variant multi-link element). The probe request variant multi-link element includes first link information. The first link information includes a first subfield and a second subfield. When a value of the first subfield is a first value, a value of the second subfield is a second value, and a frame body of the probe request frame includes a request element, but the first link information includes no request element, the first link information indicates to request critical update-related element information of a first link.

## Description

This application claims priority to Chinese Patent Application No. 202110662271.3, filed with the China National Intellectual Property Administration on June 15, 2021 and entitled "MULTI-LINK COMMUNICATION-BASED PROBE REQUEST METHOD AND APPARATUS", which is incorporated herein by reference in its entirety.

### TECHNICAL FIELD

This application relates to the field of communication technologies, and in particular, to a multi-link communication-based probe request method and an apparatus.

### BACKGROUND

A next-generation wireless local area network (wireless local area network, WLAN) standard is developing and evolving towards increasing throughput. WLAN system standards are mainly studied and discussed by the institute of electrical and electronics engineers (institute of electrical and electronics engineers, IEEE) 802.11 standard group. Extremely high throughput (extremely high throughput, EHT) is targeted in the next-generation standard, for example, a key technology may include multi-link (multi-link, ML) communication.

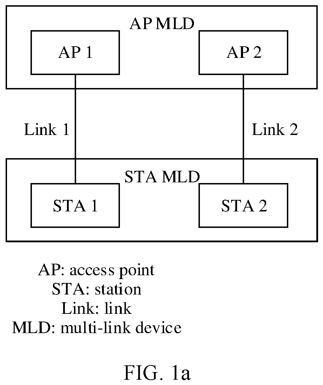

A core idea of multi-link communication is that a WLAN device, for example, an EHT device, that supports the next-generation IEEE 802.11 standard has a capability of transmitting and/or receiving on a plurality of frequency bands, so that transmission can be performed on a larger bandwidth. This can further improve throughput. For example, the plurality of frequency bands mainly include but are not limited to a 2.4 GHz Wi-Fi frequency band, a 5 GHz Wi-Fi frequency band, or a 6 GHz Wi-Fi frequency band. For example, access and/or transmission on each frequency band are/is referred to as one link, and access and/or transmission on a plurality of frequency bands are/is referred to as an ML. For example, a device that supports multi-link communication is referred to as a multi-link device (multi-link device, MLD). FIG. 1a shows an example of a simple multi-link communication scenario. For example, there are a plurality of access points (access points, APs) or stations (stations, STAs) in the MLD device, to form an AP MLD or a non-AP MLD. Communication between MLDs is multi-link communication, and a link 1 and a link 2 shown in FIG. 1a form a multi-link. If a STA wants to learn of more information about an AP, the STA may obtain more information about the AP through active scanning. When performing active scanning, the STA may send a probe request frame on each channel on which the STA searches for the AP; and after receiving the probe request frame, the AP may feed back, based on a probe response frame, information required by the STA.

However, in the foregoing communication process, how to allow the AP to accurately learn of the information required by the STA needs to be urgently resolved.

### SUMMARY

This application provides a multi-link communication-based probe request method and an apparatus, so that a transmitter device can clearly indicate information required by the transmitter device, and a receiver device can accurately feed back the information required by the transmitter device, to improve information exchange efficiency.

According to a first aspect, an embodiment of this application provides a multi-link communication-based probe request method. The method includes:

A transmitter device generates a probe request frame, where the probe request frame includes a probe request variant multi-link element (probe request variant multi-link element), the probe request variant multi-link element includes first link information, the first link information includes a first subfield and a second subfield, when a value of the first subfield is a first value, a value of the second subfield is a second value, and a frame body of the probe request frame includes a request element, but the first link information includes no request element, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link. The transmitter device sends the probe request frame.

The transmitter device may include a non-AP MLD, a STA in the non-AP MLD, a Wi-Fi chip, or the like.

For example, the first link information may also be referred to as a first per-STA profile (per-STA profile) subelement. The first subfield may be a complete profile (complete profile) subfield. The second subfield may be a critical update request (critical update requested) subfield. Generally, the STA may indicate, to a corresponding AP based on the request element, element information that needs to be requested by the STA. That is, the request element may indicate the element information that needs to be requested. Generally, the STA may obtain, from a beacon frame, a prompt that the AP and another AP in an AP MLD to which the AP belongs have a critical update. However, the STA cannot learn of a specifically updated element and a new parameter that is obtained through a current update. Therefore, the second subfield may indicate whether to request the critical update-related element information. In other words, the critical update-related element information may be element information known to both the transmitter device and a receiver device. The transmitter device may learn, based on the beacon frame, that the critical update-related element information of the receiver device changes. However, the transmitter device still needs to request, from the corresponding AP by using the second subfield, changed element information in the critical update-related element information.

It may be understood that the probe request frame described in this application may also be referred to as a multi-link probe request frame.

Generally, when complete profile in the per-STA profile is set to 0, critical update requested in the per-STA profile is set to 1, and no (extended) request element is present in the per-STA profile subelement, an AP corresponding to the per-STA profile subelement cannot effectively learn that element information the same as the frame body and the critical update-related element information need to be fed back, and still feeds back only the critical update-related element information. However, according to the method provided in this embodiment of this application, the transmitter device can clearly indicate, to the corresponding AP, that the transmitter device needs to request the critical update-related element information. In addition, the corresponding AP can effectively learn that the corresponding AP needs to feed back the critical update-related element information. This effectively solves a problem that the transmitter device and the receiver device may differently interpret link information, and further improves information exchange efficiency.

According to a second aspect, an embodiment of this application provides a multi-link communication-based probe request method. The method includes:

A receiver device receives a probe request frame, where the probe request frame includes a probe request variant multi-link element, the probe request variant multi-link element includes first link information, the first link information includes a first subfield and a second subfield, when a value of the first subfield is a first value, a value of the second subfield is a second value, and a frame body of the probe request frame includes a request element, but the first link information includes no request element, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link. The receiver device generates a probe response frame based on the probe request frame, and sends the probe response frame.

For a description of the second aspect, refer to the first aspect. Details are not described herein again.

In any possible implementation of the first aspect or the second aspect, the request element includes at least one of a common request element or an extended request element.

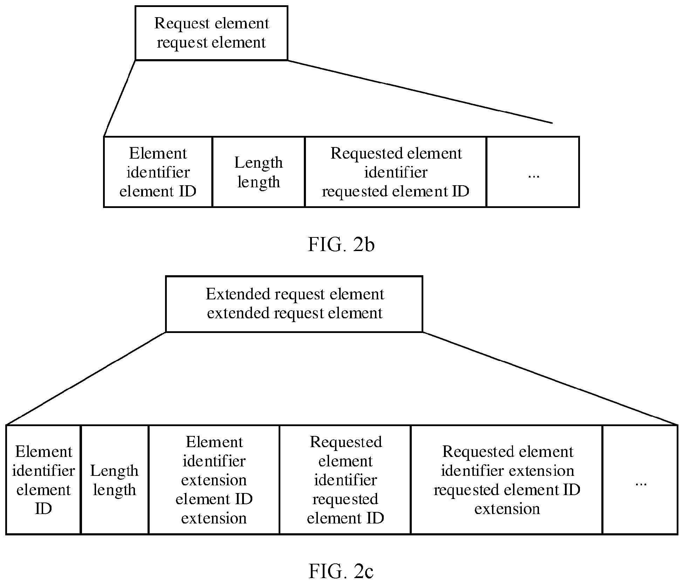

The common request element described in this embodiment of this application is relative to the extended request element. For example, for a structure of the common request element, refer to FIG. 2b, and for the extended request element, refer to FIG. 2c.

In any possible implementation of the first aspect or the second aspect, the probe request variant multi-link element further includes second link information. The second link information includes a first subfield and a second subfield. When a value of the first subfield is the first value, a value of the second subfield is the second value, and the second link information includes a request element, the second link information indicates to request critical update-related element information of a second link and element information requested by the request element in the second link information. The second link information corresponds to the second link.

In any possible implementation of the first aspect or the second aspect, the probe request variant multi-link element further includes third link information. The third link information includes a first subfield and a second subfield. When a value of the first subfield is the first value, a value of the second subfield is the first value, and the third link information includes no request element, the third link information indicates that requested element information of a third link is inherited from the frame body of the probe request frame. The value of the second subfield is the first value, to indicate not to request critical update-related element information of the third link. The third link information corresponds to the third link.

It may be understood that the foregoing first aspect is described by using the first link information as an example. The first aspect may be further replaced with: A transmitter device generates a probe request frame, where the probe request frame includes a probe request variant multi-link element (probe request variant multi-link element), the probe request variant multi-link element includes second link information, the second link information includes a first subfield and a second subfield, when a value of the first subfield is a first value, a value of the second subfield is a second value, a frame body of the probe request frame includes a request element, and the second link information includes a request element, the second link information indicates to request critical update-related element information of a second link and element information requested by the request element in the second link information, the value of the first subfield is the first value, to indicate to request partial information about a first link, the value of the second subfield is the second value, to indicate to request critical update-related element information of the first link, and the second link information corresponds to the second link. The transmitter device sends the probe request frame.

The second aspect may be further replaced with:

A receiver device receives a probe request frame, where the probe request frame includes a probe request variant multi-link element (probe request variant multi-link element), the probe request variant multi-link element includes second link information, the second link information includes a first subfield and a second subfield, when a value of the first subfield is a first value, a value of the second subfield is a second value, a frame body of the probe request frame includes a request element, and the second link information includes a request element, the second link information indicates to request critical update-related element information of a second link and element information requested by the request element in the second link information, the value of the first subfield is the first value, to indicate to request partial information about a first link, the value of the second subfield is the second value, to indicate to request critical update-related element information of the first link, and the second link information corresponds to the second link. The receiver device generates a probe response frame based on the probe request frame, and sends the probe response frame.

When the first link information in the first aspect or the second aspect is replaced with the second link information, in a possible implementation, the probe request frame further includes the first link information. In another possible implementation, the probe request frame further includes the third link information.

For descriptions of the first link information, the second link information, or the third link information, refer to the first aspect or the second aspect.

According to a third aspect, an embodiment of this application provides a multi-link communication-based probe request method. The method includes:

A transmitter device generates a probe request frame, where the probe request frame includes a probe request variant multi-link element, the probe request variant multi-link element includes first link information, the first link information includes a first subfield and a second subfield, when a value of the first subfield is a first value, a value of the second subfield is a second value, the first link information includes a request element, and a value of a first field in the request element is a special value, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link. The transmitter device sends the probe request frame.

According to a fourth aspect, an embodiment of this application provides a multi-link communication-based probe request method. The method includes:

A receiver device receives a probe request frame, where the probe request frame includes a probe request variant multi-link element, the probe request variant multi-link element includes first link information, the first link information includes a first subfield and a second subfield, when a value of the first subfield is a first value, a value of the second subfield is a second value, the first link information includes a request element, and a value of a first field in the request element is a special value, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link. The receiver device generates a probe response frame based on the probe request frame, and sends the probe response frame.

For descriptions of the first subfield, the second subfield, the first link information, and the like in the third aspect or the fourth aspect, refer to the first aspect or the second aspect.

In any possible implementation of the third aspect or the fourth aspect, the request element includes at least one of a common request element or an extended request element.

In any possible implementation of the third aspect or the fourth aspect, the first field includes any one or more of a length (length) field, a requested element identifier (requested element ID) field, an element identifier extension (element ID extension) field, or a requested element identifier extension (requested element ID extension) field.

It may be understood that the special value described in this embodiment of this application is relative to a normal value.

For example, the request element includes at least one of a length field or a requested element identifier field. For example, a value of the length field in the request element may be a special value, for example, the special value is 0. For another example, a value of the length field is 1, and an ID of the requested element identifier field is a reserved (reserved) value. If the ID of the requested element identifier field is any one of 245 to 254, it indicates that an element corresponding to the ID of the requested element identifier field is empty (the element corresponding to the ID of the requested element identifier field may also be referred to as the reserved value).

For example, the extended request element includes a length field, an element identifier extension field, and a requested element identifier field. In this case, for example, a value of the length field in the request element is a special value, for example, the special value is 2. For another example, an ID of the requested element identifier field is a reserved value. If the ID of the requested element identifier field is any one of 245 to 254, it indicates that an element corresponding to the ID of the requested element identifier field is empty (the element corresponding to the ID of the requested element identifier field may also be referred to as the reserved value). It may be understood that the value of the length field may be different from a value of the element identifier extension field. The value of the length field may also be different from a value of the requested element identifier field. The value of the element identifier extension field may be different from or the same as the value of the requested element identifier field.

For example, the extended request element includes a length field, an element identifier extension field, a requested element identifier field, and a requested element identifier extension field. In this case, for example, a value of the length field in the request element is 3, and IDs corresponding to the requested element identifier field and the requested element identifier extension field are reserved values.

In any possible implementation of the third aspect or the fourth aspect, a frame body of the probe request frame includes a request element.

It may be understood that the probe request variant multi-link element in the third aspect or the fourth aspect described in this application may be further combined with the first aspect or the second aspect. For example, the probe request variant multi-link element described in this application may further include at least one of second link information or third link information.

According to a fifth aspect, an embodiment of this application provides a communication apparatus, configured to perform the method in any one of the first aspect, the third aspect, or the possible implementations of the first aspect and the third aspect. The communication apparatus includes corresponding units, configured to perform the method in any one of the first aspect, the third aspect, or the possible implementations of the first aspect and the third aspect.

For example, the communication apparatus may include a transceiver unit and a processing unit. The communication apparatus may be the transmitter device in the first aspect or the third aspect, for example, a non-AP MLD, a STA, or a chip in the non-AP MLD, for example, a Wi-Fi chip.

According to a sixth aspect, an embodiment of this application provides a communication apparatus, configured to perform the method in any one of the second aspect, the fourth aspect, or the possible implementations of the second aspect and the fourth aspect. The communication apparatus includes corresponding units, configured to perform the method in any one of the second aspect, the fourth aspect, or the possible implementations of the second aspect and the fourth aspect.

For example, the communication apparatus may include a transceiver unit and a processing unit. The communication apparatus may be the receiver device in the second aspect or the fourth aspect, for example, an AP MLD, an AP, or a chip in the AP MLD, for example, a Wi-Fi chip.

According to a seventh aspect, an embodiment of this application provides a communication apparatus. The communication apparatus includes a processor, configured to perform the method in any one of the first aspect, the third aspect, or the possible implementations of the first aspect and the third aspect.

In a process of performing the foregoing methods, a process of sending the information and a process of receiving the information in the foregoing methods may be understood as a process of outputting the information by the processor and a process of receiving the input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

Based on the foregoing principle, for example, sending the probe request frame mentioned in the foregoing method may be understood that the processor outputs the probe request frame. For another example, receiving the probe response frame may be understood as that the processor receives the input probe response frame.

Unless otherwise specified, operations such as transmission, sending, and receiving related to the processor may be more generally understood as operations such as outputting, receiving, and inputting of the processor if the operations do not conflict with actual functions or internal logic of the operations in related descriptions.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a signal and/or send a signal. For example, the transceiver may be configured to send the probe request frame. For another example, the transceiver may be further configured to receive the probe response frame and the like.

In this embodiment of this application, the communication apparatus may be the transmitter device in the first aspect or the third aspect. For example, the transmitter device may be a non-AP MLD, a STA, or the like.

According to an eighth aspect, an embodiment of this application provides a communication apparatus. The communication apparatus includes a processor, configured to execute a program stored in a memory. When the program is executed, the communication apparatus is enabled to perform the method in any one of the second aspect, the fourth aspect or the possible implementations of the second aspect and the fourth aspect.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a signal and/or send a signal. For example, the transceiver may be configured to receive a probe request frame. For another example, the transceiver may be further configured to send a probe response frame and the like.

In this embodiment of this application, the communication apparatus may be the receiver device in the second aspect or the fourth aspect. For example, the receiver device may be an AP MLD, an AP, or the like.

According to a ninth aspect, an embodiment of this application provides a communication apparatus. The communication apparatus includes a logic circuit and an interface. The logic circuit is coupled to the interface. The logic circuit is configured to generate a probe request frame. The interface is configured to output the probe request frame.

To be specific, the logic circuit is configured to perform the method in the first aspect or the third aspect, to obtain the probe request frame, and the interface is configured to output the probe request frame. It may be understood that the foregoing processed data in this application is a probe request frame.

In this embodiment of this application, the communication apparatus may be configured to perform any one of the first aspect, the third aspect, or the possible implementations of the first aspect and the third aspect. Details are not described herein again. For specific descriptions of the probe request frame and/or the probe response frame, refer to the first aspect, the third aspect, or the like. Details are not described herein again.

According to a tenth aspect, an embodiment of this application provides a communication apparatus. The communication apparatus includes a logic circuit and an interface. The logic circuit is coupled to the interface. The interface is configured to input a probe request frame. The logic circuit is configured to generate a probe response frame based on the probe request frame. The interface is further configured to output the probe response frame.

It may be understood that the foregoing descriptions of the interface and the logic circuit may be alternatively replaced with:

The interface is configured to input to-be-processed data; the logic circuit is configured to process the to-be-processed data to obtain processed data; and the interface is configured to output the processed data. The to-be-processed data described herein is a probe request frame, and the processed data is a probe response frame.

In this embodiment of this application, the communication apparatus may be configured to perform any one of the second aspect, the fourth aspect, or the possible implementations of the second aspect and the fourth aspect. Details are not described herein again. For specific descriptions of the probe request frame and/or the probe response frame, refer to the second aspect, the fourth aspect, or the like. Details are not described herein again.

According to an eleventh aspect, an embodiment of this application provides a computer-readable storage medium. The computer-readable storage medium is configured to store a computer program, and when the computer program is run on a computer, the method in any one of the first aspect, the third aspect, or the possible implementations of the first aspect and the third aspect is performed.

According to a twelfth aspect, an embodiment of this application provides a computer-readable storage medium. The computer-readable storage medium is configured to store a computer program, and when the computer program is run on a computer, the method in any one of the second aspect, the fourth aspect, or the possible implementations of the second aspect and the fourth aspect is performed.

According to a thirteenth aspect, an embodiment of this application provides a computer program product. The computer program product includes a computer program or computer code, and when the computer program product runs on a computer, the method in any one of the first aspect, the third aspect, or the possible implementations of the first aspect and the third aspect is performed.

According to a fourteenth aspect, an embodiment of this application provides a computer program product. The computer program product includes a computer program or computer code, and when the computer program product runs on a computer, the method in any one of the second aspect, the fourth aspect, or the possible implementations of the second aspect and the fourth aspect is performed.

According to a fifteenth aspect, an embodiment of this application provides a multi-link communication system. The multi-link communication system includes a non-AP MLD and an AP MLD. Optionally, the non-AP MLD is configured to perform the method in any one of the first aspect or the possible implementations of the first aspect. The AP MLD is configured to perform the method in any one of the second aspect or the possible implementations of the second aspect. Optionally, the non-AP MLD is configured to perform the method in any one of the third aspect or the possible implementations of the third aspect. The AP MLD is configured to perform the method in any one of the fourth aspect or the possible implementations of the fourth aspect.

### BRIEF DESCRIPTION OF DRAWINGS

FIG. 1a to FIG. 1c each are a schematic diagram of a communication system according to an embodiment of this application;
FIG. 2a is a schematic diagram of a structure of a probe request variant multi-link element (probe request variant multi-link element) according to an embodiment of this application;
FIG. 2b is a schematic diagram of a structure of a request element according to an embodiment of this application;
FIG. 2c is a schematic diagram of a structure of an extended request element according to an embodiment of this application;
FIG. 3 is a schematic diagram of a structure of another probe request variant multi-link element according to an embodiment of this application;
FIG. 4 is a schematic diagram of a structure of a probe request frame according to an embodiment of this application;
FIG. 5 is a schematic flowchart of a multi-link communication-based probe request method according to an embodiment of this application;
FIG. 6 is a schematic diagram of a structure of a probe request frame according to an embodiment of this application;
FIG. 7 is a schematic flowchart of a multi-link communication-based probe request method according to an embodiment of this application; and
FIG. 8 to FIG. 10 each are a schematic diagram of a structure of a communication apparatus according to an embodiment of this application.

### DESCRIPTION OF EMBODIMENTS

To make objectives, technical solutions, and advantages of this application clearer, the following further describes this application with reference to the accompanying drawings.

In the specification, claims, and the accompanying drawings of this application, terms such as "first" and "second" are only intended to distinguish between different objects but do not describe a particular order. In addition, terms "include", "have", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily mean a same embodiment, and is not an independent or alternative embodiment exclusive from another embodiment. It is explicitly and implicitly understood by a person skilled in the art that embodiments described in the specification may be combined with another embodiment.

In this application, "at least one piece (item)" means one or more, "a plurality of" means two or more, "at least two pieces (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items. For example, at least one of a, b, and c may represent a, b, c, "a and b", "a and c", "b and c", or "a, b, and c".

A multi-link communication-based probe request method provided in this application may be applied to a wireless communication system. The wireless communication system may include a wireless local area network (wireless local area network, WLAN), a cellular network, or the like. The method may be implemented by a communication device in the wireless communication system, a logic circuit or a processor in the communication device, or the like. The communication device may be a wireless communication device that supports parallel transmission on a plurality of links, for example, referred to as a multi-link device (multi-link device, MLD) or a multi-band device (multi-band device). For example, in the wireless local area network, the communication device supports communication based on IEEE 802.11 series protocols, and the IEEE 802.11 series protocols include: 802.11be, a next-generation protocol of 802.11be, 802.11ax, 802.11a/b/g/n/ac, or the like. Details are not described herein again.

The following first describes the multi-link device in this application, and then describes a scenario, a probe request frame, and the like in this application in combination with the multi-link device.

The multi-link device includes one or more affiliated stations. The affiliated station is a logical station, and may operate on one link, one band, one channel, or the like. The affiliated station may be an access point (access point, AP) or a non-access point station (non-access point station, non-AP STA). For ease of description, in this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device), or a multi-link device whose affiliated station is a non-AP STA is referred to as a multi-link non-AP, a multi-link non-AP device, a non-AP multi-link device (non-AP multi-link device, non-AP MLD), or the like. In the following description, a multi-link device whose affiliated station is an AP is referred to as an AP MLD, and a multi-link device whose affiliated station is a non-AP STA is referred to as a non-AP MLD. There are one or more affiliated APs in the AP MLD, and there are one or more affiliated STAs in the STA MLD.

The multi-link device may implement wireless communication in compliance with the 802.11 series protocols. For example, a multi-link device in compliance with extremely high throughput (extremely high throughput, EHT) or a multi-link device in compliance with 802.11be or compatible with 802.11be implements communication with another device.

The multi-link device (which may be a non-AP MLD or an AP MLD herein) is a communication apparatus with a wireless communication function. The communication apparatus may be an entire device, or may be a chip, a processing system, or the like installed in the entire device. The device in which the chip or the processing system is installed may implement the method and the function in embodiments of this application under control of the chip or the processing system. For example, the non-AP multi-link device in embodiments of this application has a wireless transceiver function, may support the 802.11 series protocols, and may communicate with the AP multi-link device or another non-AP multi-link device. For example, the non-AP multi-link device is any user communication device that allows a user to communicate with an AP and then communicate with a WLAN. For example, the non-AP multi-link device may be user equipment that can access a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone; or may be an Internet of Things node in the Internet of Things, an in-vehicle communication apparatus in the Internet of Vehicles, or the like. The non-AP multi-link device may alternatively be a chip and a processing system in the foregoing terminals. The AP multi-link device may be an apparatus that provides a service for the non-AP multi-link device, and may support the 802.11 series protocols. For example, the AP multi-link device may be a communication entity such as a communication server, a router, a switch, or a bridge; or the AP multi-link device may include various forms of macro base stations, micro base stations, relay stations, and the like. Certainly, the AP multi-link device may alternatively be a chip and a processing system in the various forms of devices. The 802.11 protocol may be a protocol that supports the 802.1The or is compatible with the 802.11be.

It may be understood that the multi-link device may support high-rate and low-latency transmission. With continuous evolution of application scenarios of a wireless local area network, the multi-link device may be further applied to more scenarios, for example, a sensor node (for example, a smart meter, a smart electricity meter, and a smart air detection node) in a smart city, a smart device (for example, a smart camera, a projector, a display, a television, a stereo, a refrigerator, and a washing machine) in a smart home, a node in the Internet of Things, an entertainment terminal (for example, AR, VR, or other wearable devices), a smart device (for example, a printer and a projector) in a smart office, an Internet of Vehicles device in the Internet of Vehicles, and some infrastructures (for example, a vending machine, a self-service navigation console in a supermarket, a self-service cash register device, and a self-service ordering machine) in a daily life scenario. A specific form of the multi-link device is not limited in embodiments of this application, and is merely an example for description herein.

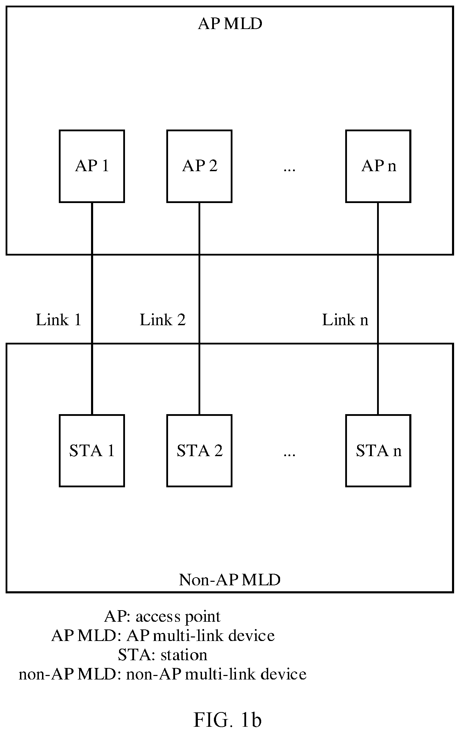

In combination with the multi-link device described above, FIG. 1b is a schematic diagram of a multi-link communication scenario according to an embodiment of this application. As shown in FIG. 1b, the AP MLD includes an AP 1, an AP 2, ..., and an AP n. The non-AP MLD includes a STA 1, a STA 2, ..., and a STA n. Herein, n is a positive integer. The AP MLD and the non-AP MLD may perform parallel communication on a link 1, a link 2, ..., and a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD. Therefore, one or more STAs in the non-AP MLD and one or more APs in the AP MLD may communicate after establishing an association relationship.

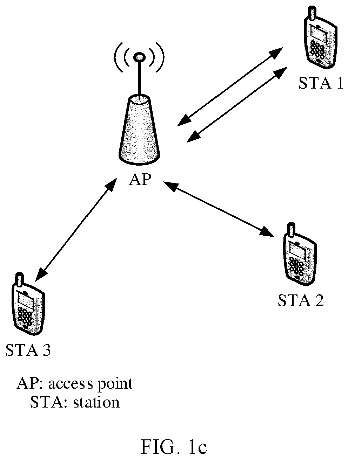

FIG. 1c is a schematic diagram of another multi-link communication scenario according to an embodiment of this application. As shown in FIG. 1c, at least one AP and at least one STA are included. FIG. 1c shows three STAs, for example, a STA 1, a STA 2, and a STA 3. For example, the STA 1 may communicate with an AP through two links, and the two links may be two arrows shown in FIG. 1c. For another example, the STA 2 or the STA 3 may communicate with an AP through one link. In other words, the system shown in FIG. 1c includes both multi-link communication and single-link communication.

The method provided in this application is applicable to, but is not limited to single-user uplink/downlink transmission, multi-user uplink/downlink transmission, vehicle-to-everything (vehicle-to-everything, V2X, where X may represent anything) communication, and device-to-device (device-to-device, D2D) communication. For example, the V2X communication may include vehicle-to-vehicle (vehicle to vehicle, V2V) communication, vehicle-to-infrastructure (vehicle to infrastructure, V2I) communication, vehicle-to-pedestrian (vehicle to pedestrian, V2P) communication, vehicle-to-network (vehicle-to-network, V2N) communication, or the like.

For example, a station may discover, through scanning, a basic service set (basic service set, BSS) and an attribute associated with the BSS. The scanning is classified into active scanning and passive scanning. During passive scanning, a STA may search for a beacon (beacon) frame. The beacon frame includes information such as country code information or a maximum allowed transmit power. If the STA wants to learn of more information about the AP, the STA may further obtain the information through active scanning. During active scanning, a STA may send a probe request frame (probe request frame) on each channel on which the STA searches for the AP. After receiving the probe request frame, the AP may feed back, based on a probe response frame (probe response frame), information required by the STA.

Due to introduction of multi-link communication (for example, 802. 1 1be), in addition to active scanning, the non-AP MLD may send a multi-link probe request frame to the AP MLD, to obtain some or all of capability information, a parameter, mode element information, and the like of an AP belonging to a same MLD. For example, an address 1 field of the multi-link probe request frame is set to a broadcast address, and an address 3 field of the multi-link probe request frame is set to a basic service set identifier (basic service set identifier, BSSID) of the AP. Alternatively, an address 1 field of the multi-link probe request frame is a BSSID of the AP, and carries a probe request variant multi-link element (probe request variant multi-link element).

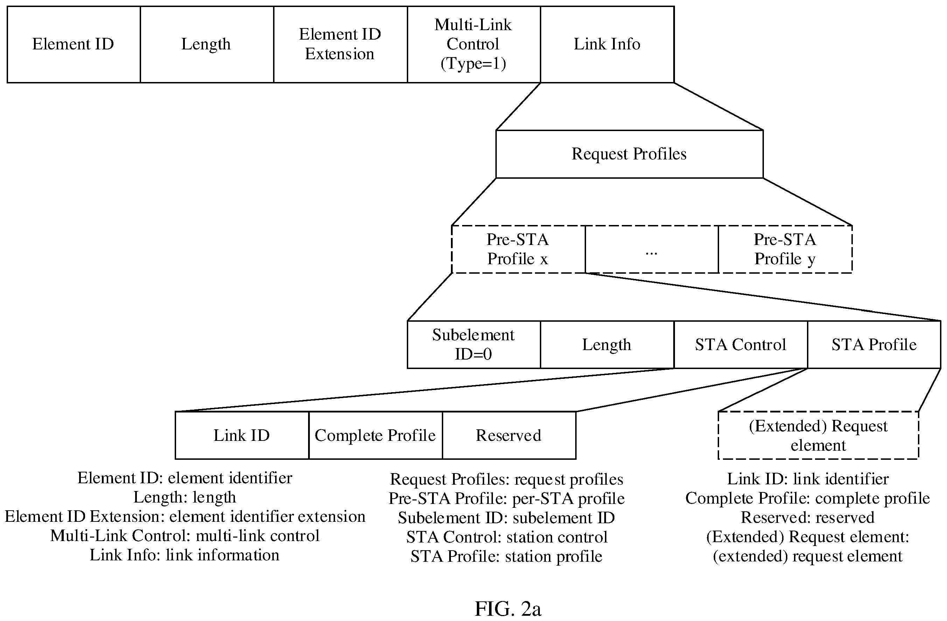

For example, FIG. 2a is a schematic diagram of a structure of a probe request variant multi-link element (probe request variant multi-link element) according to an embodiment of this application.

As shown in FIG. 2a, the probe request variant multi-link element includes an element identifier (element ID), a length (length), an element identifier extension (element ID extension), a multi-link control (multi-link control) field, and a link information (link info) field. For example, the link info field includes zero, one, or more per-STA profile (per-STA profile) subelements. The per-STA profile subelement may include a subelement identifier (subelement ID), a length (length), a station control (STA control) field, and a station profile (STA profile) field. The STA control field may include a link identifier (link ID) subfield, a complete profile (complete profile) subfield, and a reserved (reserved) field. The STA profile field includes an (extended) request element ((extended) request element) (which may also be referred to as an (extended) request element, an (extended) request element, or an (extended) request element). The (extended) request element may be understood as at least one of a request element (request element) or an extended request element (extended request element). The foregoing information included in the per-STA profile may indicate that the per-STA profile subelement may be used to carry information about a link, in other words, the per-STA profile subelement is in a one-to-one correspondence with the link. In addition, based on a relationship between the link and a STA, the per-STA profile subelement in this application may also be referred to as link information. For brevity of this application, the per-STA profile subelement is referred to as the link information in this application.

For example, when a subfield type (type) of the multi-link control field is set to 1, it indicates that a multi-link element is a probe request variant multi-link element. The link info field may include zero, one, or more per-STA profile subelements, and each per-STA profile subelement corresponds to one link. In addition, because a link may be in a one-to-one correspondence with an AP, each per-STA profile subelement may also correspond to one AP, and it indicates that the STA requests partial or all information of the corresponding AP. For example, the link ID may be used to identify a corresponding link or AP. When complete profile is set to 0, it indicates to request partial information of the corresponding link. When complete profile is set to 1, it indicates to request all information of the corresponding link.

If the STA wants to request partial information of the AP, an element identifier (element ID) of a specific element requested by the STA may be carried in the (extended) request element in the STA profile field in the per-STA profile subelement corresponding to the link ID corresponding to the AP, to request corresponding element information from the AP. In the foregoing case, the complete profile subfield of the STA control field in the per-STA profile subelement is set to 0. That is, if a STA needs to request partial information of a specific AP, the AP may be identified by a link ID, and element information that needs to be requested is indicated by an (extended) request element in a STA profile field in a corresponding pre-STA profile (namely, a pre-STA profile corresponding to the link ID) subelement. It may be understood that all information (which may also be referred to as complete information) and partial information in this application are relative to one link. To be specific, all element information corresponding to one link is briefly referred to as all information, and partial or specific element information corresponding to one link is referred to as partial information. One link shown herein is a link identified by a link ID in a per-STA profile. In other words, all information and partial information in this application are relative to one AP. To be specific, all element information corresponding to one AP is briefly referred to as all information, and partial information or specific element information corresponding to one AP is briefly referred to as partial information.

FIG. 2b is a schematic diagram of a structure of a request element according to an embodiment of this application. As shown in FIG. 2b, the request element may include an element identifier (element ID) field, a length (length) field, and a requested element identifier (requested element ID) field.

FIG. 2c is a schematic diagram of a structure of an extended request element according to an embodiment of this application. As shown in FIG. 2c, in addition to an element identifier field, a length field, and a requested element identifier field, the extended request element may further include an element identifier extension (element ID extension) field. Optionally, the extended request element may further include a requested element identifier extension (requested element ID extension) field. It can be learned from FIG. 2b and FIG. 2c that, the request element may indicate, by using a requested element identifier, element information, of a corresponding link, to be requested by a transmitter device; or the extended request element may indicate, by using a requested element identifier and requested element identifier extension, element information, of a corresponding link, to be requested by a transmitter device. In other words, the STA may indicate, to the corresponding AP based on the (extended) request element, the element information that needs to be requested by the STA. That is, the (extended) request element may indicate the element information that needs to be requested. It may be understood that a common request element described below in this application may be understood as the request element shown in FIG. 2b, and an extended request element may be understood as the extended request element shown in FIG. 2c.

It may be understood that the schematic diagrams of the structures shown in FIG. 2b and FIG. 2c are merely examples. The structure of the request element and the structure of the extended request element may change with standard development, technology evolution, or the like. This is not limited in this application.

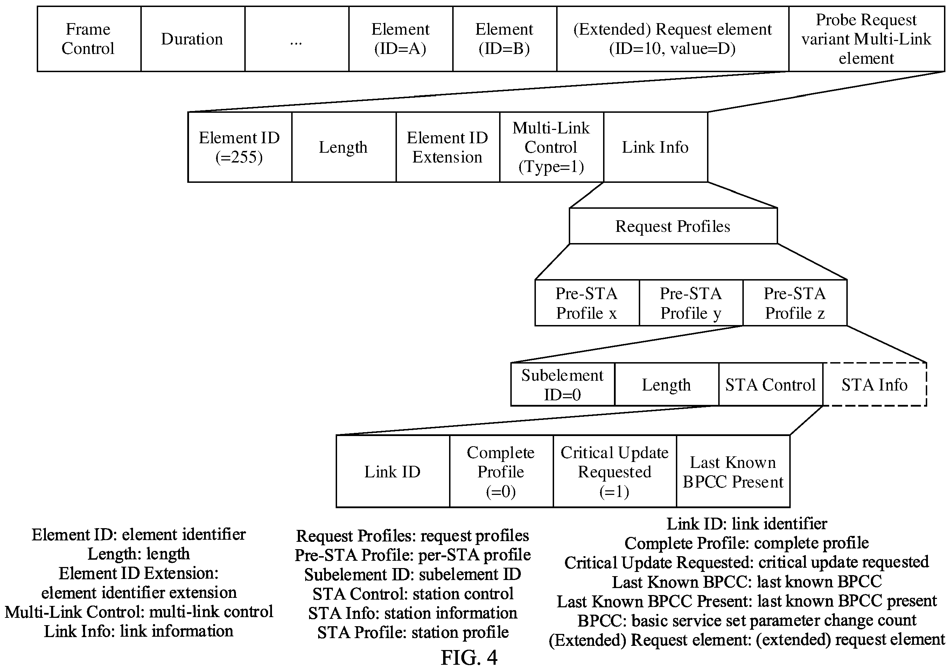

Due to a structure feature of the probe request variant multi-link element, the probe request variant multi-link element further has inheritance, to reduce signaling overheads and simplify a frame structure. An implementation of the inheritance of the probe request variant multi-link element includes:
If an (extended) request element ((extended) request element) is present in a frame body (frame body), no (extended) request element is present in a per-STA profile subelement of the probe request variant multi-link element, and a complete profile subfield of a STA control field in the per-STA profile subelement is set to 0, the (extended) request element in the per-STA profile subelement is actually inherited from the (extended) request element of the frame body (If the (Extended) Request element is present in the Probe Request frame body and the (Extended) Request element is not present and a Complete Profile subfield of a STA Control field is set to 0 in a Per-STAProfile subelement of a Probe Request variant Multi-Link element of a Probe Request frame, the (Extended) Request element corresponding to the per-STA profile is inherited from the (Extended) Request element in the body of the Probe Request frame.), that is, values are the same. It may be understood that, for descriptions of the frame body and the (extended) request element or the like, refer to FIG. 4.

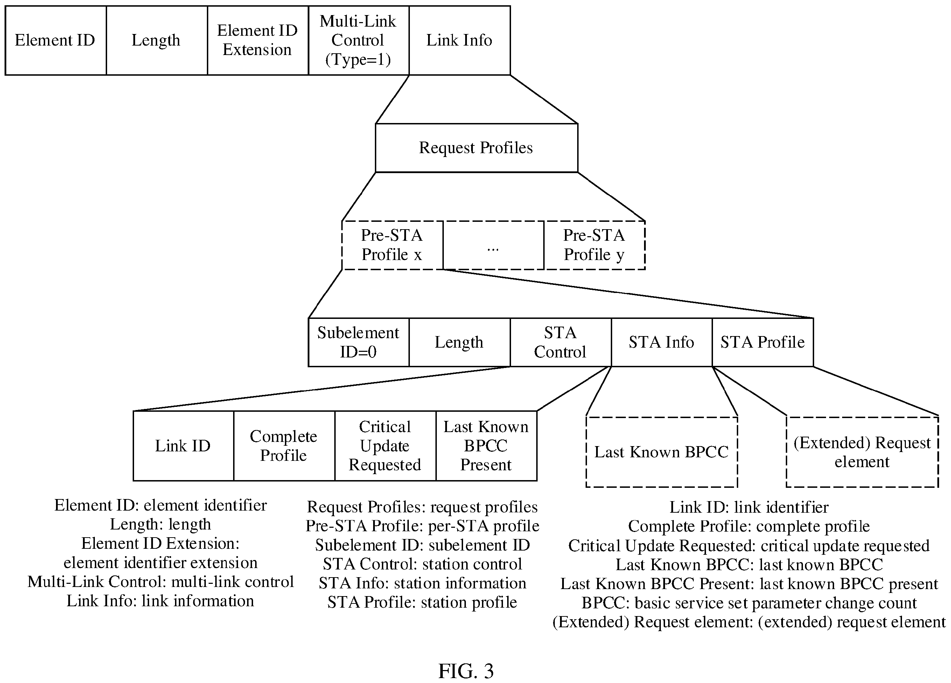

FIG. 3 is a schematic diagram of a structure of another probe request variant multi-link element according to an embodiment of this application. A difference between the probe request variant multi-link element shown in FIG. 3 and the probe request variant multi-link element shown in FIG. 2a lies in a STA control field shown in FIG. 3. As shown in FIG. 3, the STA control field includes a link identifier (link ID) subfield, a complete profile (complete profile) subfield, and a critical update requested (critical update requested) subfield. Optionally, the STA control field further includes last known BSS parameter change count (BSS parameter change count, BPCC) present (last known BPCC present). Optionally, a per-STA profile subelement shown in FIG. 3 may further include a station information (STA info) field, and the station information field may include a last known BPCC (last known BPCC).

For example, a STA may request critical update (critical update)-related element information from an AP. The critical update-related element information includes at least one of the following: a channel switch announcement element (channel switch announcement element), an extended channel switch announcement element (extended channel switch announcement element), an enhanced distributed channel access (enhanced distributed channel access, EDCA), a parameter element (parameter element), a quiet element (quiet element), a high throughput (high throughput, HT) operation element (HT operation element), a very high throughput (very high throughput, VHT) operation element (VHT operation element), and an extremely high throughput (extremely high throughput, EHT) operation element (VHT operation element). It may be understood that the critical update-related element information in this application is merely an example. For specific content of the element information, refer to a related standard or protocol, or the like.

Generally, the STA may obtain, from a beacon frame, a prompt that the AP and another AP in an AP MLD to which the AP belongs have a critical update. However, the STA cannot learn of a specifically updated element and a new parameter that is obtained through a current update. Therefore, the critical update requested (critical update requested) subfield may be added to the STA control field in the per-STA profile subelement of the probe request variant multi-link element. The critical update requested subfield may indicate whether to request the critical update-related element information. Optionally, the STA may report a last known BPCC (last known BPCC shown in FIG. 3). In other words, the critical update-related element information may be element information known to both the STA and the AP. The STA may learn, based on the beacon frame, that the critical update-related element information of the AP changes. However, the STA still needs to request, from the AP by using the critical update requested subfield, changed element information in the critical update-related element information.

For example, when the critical update requested subfield is set to 1 (which may also be understood as that a value of the critical update requested subfield is 1), a value of the complete profile subfield cannot be 1. For example, when a value of the complete profile subfield is 1, it indicates that the STA needs to request all information of a corresponding link (which is identified by a link ID corresponding to the complete profile). In this case, regardless of whether the value of the critical update requested subfield is 0 or 1, the AP needs to feed back all information of the corresponding link. Therefore, when the value of the critical update requested subfield is 1, the value of the complete profile subfield cannot be 1.

The complete profile in this application may also be understood as all profiles, requested complete profile (complete profile requested), or the like. A name of the complete profile is not limited in this application.

An (extended) request element is present in a frame body of the probe request variant multi-link element. For a per-STA profile subelement, when a critical update requested subfield of a STA control field in the per-STA profile subelement is set to 1, and a complete profile subfield is set to 0, no (extended) request element is present. In the foregoing case, there are two implementations: First, the STA requests, from the AP corresponding to the per-STA profile, critical update-related element information and element information the same as the frame body. Second, the STA requests, from the AP corresponding to the per-STA profile, only critical update-related element information, and does not need to use an additional element ID for indication.

For example, FIG. 4 is a schematic diagram of a structure of a probe request frame according to an embodiment of this application. The probe request frame includes a frame control (frame control), duration (duration), an element (element), an (extended) request element ((extended) requested element), a probe request variant multi-link element, and the like. If the (extended) request element is present in a first row in FIG. 4, it indicates that the (extended) request element is present in a frame body of the probe request frame. If an ID of the (extended) request element shown in FIG. 4 is 10 and a value is D, it indicates that an element identifier of the (extended) request element is 10, and a requested element identifier, that is, the value, is D. Optionally, a STA info field represented by a dashed line in FIG. 4 indicates that the STA info field may be present or may be not present.

As shown in FIG. 4, the probe request frame carries the probe request variant multi-link element, and the probe request variant multi-link element includes three per-STA profiles, for example, a per-STA profile x, a per-STA profile y, and a per-STA profile z. In combination with the (extended) request element included in the frame body, and value=10, it indicates that a STA requests, by using the frame body from an AP receiving the probe request frame, element information whose element ID is D, and requests, based on the probe request variant multi-link element, information about an AP x, an AP y, and an AP z that belong to a same AP MLD. The AP x shown herein may be identified by a link ID subfield of a STA control field in a per-STA profile subelement x, the AP y may be identified by a link ID subfield of a STA control field in the per-STA profile subelement y, and the AP z may be identified by a link ID subfield of a STA control field in the per-STA profile subelement z.

For example, for the per-STA profile subelement z, complete profile is set to 0, and critical update requested is set to 1. When critical update requested is set to 1, it indicates that the STA needs to request critical update-related element information. However, because the frame body includes the (extended) request element, and no (extended) request element is present in a STA profile field in the per-STA profile subelement z, it indicates that the (extended) request element in the per-STA profile subelement z needs to be inherited from the frame body. Therefore, in addition to the critical update-related element information, the STA may also need to request information whose element ID is D (which is consistent with a value of the (extended) request element in the frame body, and therefore no (extended) request element is present in the STA profile field of the per-STA profile subelement z). Alternatively, the STA requests only the critical update-related element information, and does not need an additional element ID indication.

That is, when complete profile in the per-STA profile is set to 0, critical update requested in the per-STA profile is set to 1, and no (extended) request element is present in the per-STA profile subelement, the AP corresponding to the per-STA profile subelement cannot effectively learn that element information the same as the frame body and the critical update-related element information need to be fed back, and still feeds back only the critical update-related element information.

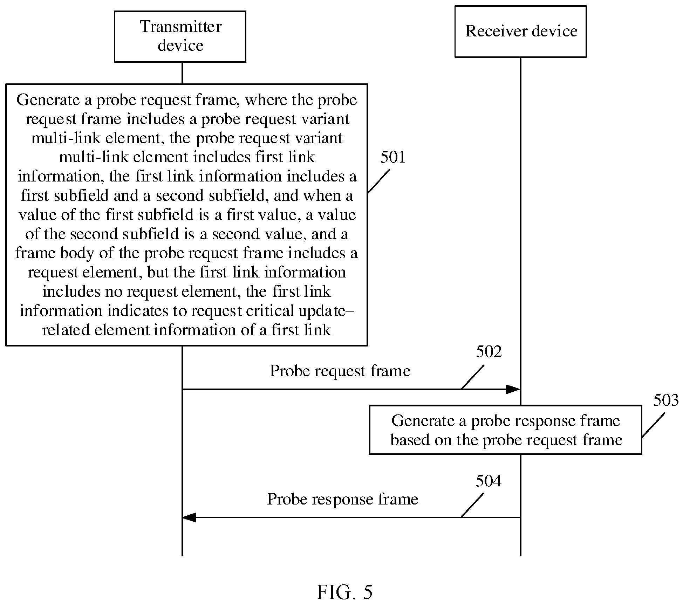

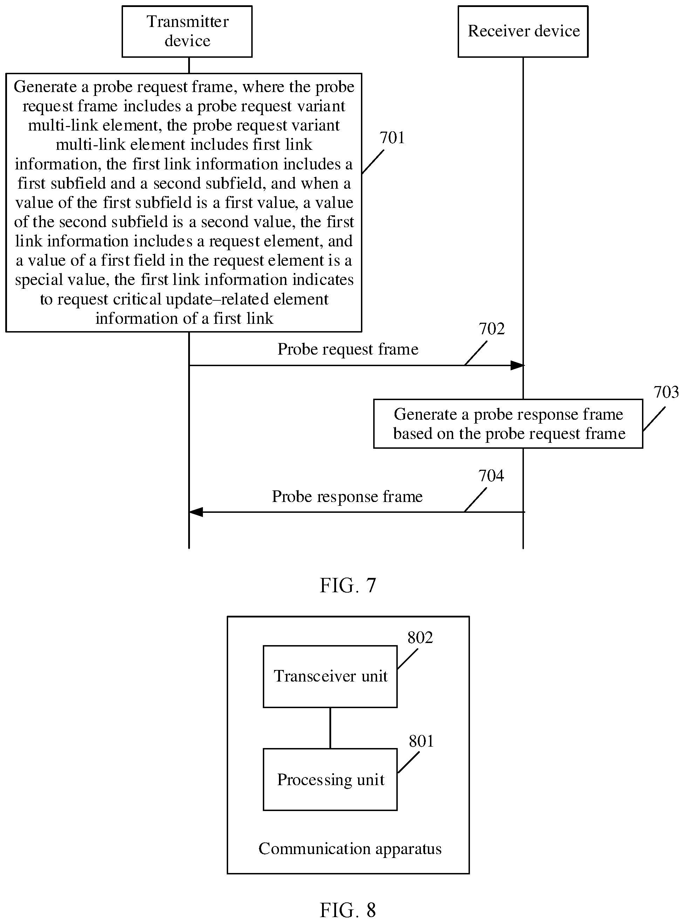

In view of this, embodiments of this application provide a multi-link communication-based probe request method and an apparatus. The method (shown in FIG. 5 or FIG. 7 below) and the apparatus (shown in FIG. 8 to FIG. 10 below) provided in this application can effectively resolve foregoing problem. In this way, a transmitter device can clearly indicate, to a corresponding AP, that the transmitter device needs to request element information the same as a frame body or critical update-related element information. In addition, the corresponding AP can effectively learn that the corresponding AP needs to feed back the element information the same as the frame body or the critical update-related element information. This effectively solves a problem that the transmitter device and a receiver device may differently interpret link information, and further improves information exchange efficiency.

For an application scenario of the multi-link communication-based probe request method provided in this application, refer to at least one of FIG. 1a to FIG. 1c. For a specific description of a probe request frame, refer to at least one of FIG. 2a, FIG. 3, FIG. 4, or the like. For example, the transmitter device in this application may include a STA, a non-AP MLD, a STA or a Wi-Fi chip in the non-AP MLD, or the like, and the receiver device may include an AP, an AP MLD, an AP or a Wi-Fi chip in the AP MLD, or the like. For example, the method in embodiments of this application may be applied to a STA in the non-AP MLD and an AP in the AP MLD. For another example, the method in embodiments of this application may be applied to the AP, the STA 1, and the like shown in FIG. 1c. This is not limited in embodiments of this application. For example, when a link info field includes 0 per-STA profile subelements, it indicates that the transmitter device needs to request element information of all APs that belong to a same MLD. For example, when a link info field includes one per-STA profile subelement, it indicates that the transmitter device needs to request element information of an AP corresponding to the per-STA profile subelement. For example, when a link info field includes two or more per-STA profile subelements, it indicates that the transmitter device needs to request element information of two or more APs that belong to a same MLD.

FIG. 5 is a schematic flowchart of a multi-link communication-based probe request method according to an embodiment of this application. As shown in FIG. 5, the method includes the following steps.

501: A transmitter device generates a probe request frame. The probe request frame includes a probe request variant multi-link element. The probe request variant multi-link element includes first link information. The first link information includes a first subfield and a second subfield. When a value of the first subfield is a first value, a value of the second subfield is a second value, and a frame body of the probe request frame includes a request element, but the first link information includes no request element, the first link information indicates to request critical update-related element information of a first link.

In this embodiment of this application, the value of the first subfield is the first value, to indicate to request partial information about the first link, the value of the second subfield is the second value, to indicate to request the critical update-related element information of the first link, and the first link information corresponds to the first link. In other words, the value of the first subfield is the first value, to indicate to request partial information about a first AP, and the value of the second subfield is the second value, to indicate to request critical update-related element information of the first AP; or the value of the first subfield is the first value, to indicate to request to feed back partial information about a first AP, and the value of the second subfield is the second value, to indicate to request to feed back critical update-related element information of the first AP. Similarly, the first link information indicates to request the critical update-related element information of the first AP, or the first link information indicates to request to feed back the critical update-related element information of the first AP or the like. For a relationship between a link and an AP, refer to the foregoing description. Details are not described herein again.

For example, the first subfield may be a complete profile (complete profile) subfield, and the second subfield may be a critical update requested (critical update requested) subfield. For example, a bit length of the complete profile subfield in this embodiment of this application may be 1 bit, and a bit length of the critical update requested subfield may be 1 bit. For example, the first value may be 0, and the second value may be 1. 0 and 1 described herein are merely examples, and should not be construed as a limitation on this embodiment of this application. It may be understood that for specific descriptions of the complete profile subfield, the critical update requested subfield, or the like, refer to the foregoing embodiments. Details are not described again in this embodiment of this application.

For example, the request element may include at least one of a request element (namely, a common request element) shown in FIG. 2b or an extended request element (namely, an extended request element) shown in FIG. 2c. For example, the frame body of the probe request frame includes the request element or the extended request element, and the first link information includes no request element or extended request element. It may be understood that the common request element described in this embodiment of this application is relative to the extended request element. For example, the request element may also be understood as the (extended) request element described above.

The first link information indicates to request to feed back the critical update-related element information of the first link, which may be implemented in the following manners:

First, when the (extended) request element is present in the frame body of the probe request frame, no (extended) request element is present in a per-STA profile subelement of the probe request variant multi-link element carried in the probe request frame, and in a STA control field in the per-STA profile subelement, complete profile is set to 0 and critical update requested is set to 1, it indicates that the transmitter device does not need to request, based on the (extended) request element, specific element information other than the critical update-related element information from an AP corresponding to the per-STA profile subelement.

In other words, when the (extended) request element is present in the frame body of the probe request frame, no (extended) request element is present in the per-STA profile subelement of the probe request variant multi-link element carried in the probe request frame, and in the STA control field in the per-STA profile subelement, complete profile is set to 0 and critical update requested is set to 1, it indicates that a STA does not need to request, based on the (extended) request element, specific element information other than the critical update-related element information from the AP corresponding to the per-STA profile subelement. It may be understood that the per-STA profile subelement of the probe request variant multi-link element described herein may be understood as the first link information described in this embodiment of this application. The AP corresponding to the per-STA profile subelement is the first AP.

Second, as long as the first link information includes no (extended) request element, it indicates that the transmitter device does not need to request, based on the (extended) request element, element information other than the critical update-related element information from the first AP. In other words, although complete profile is set to 0, the frame body includes the (extended) request element, and the first link information includes no (extended) request element, the (extended) request element in the first link information does not need to be inherited from the frame body of the probe request frame.

Third, when the (extended) request element is present in the frame body of the probe request frame, no (extended) request element is present in a per-STA profile subelement of the probe request variant multi-link element carried in the probe request frame, and in a STA control field in the per-STA profile subelement, complete profile is set to 0 and critical update requested is set to 1, it indicates that the transmitter device is not allowed to request additional specific element information while requesting the critical update-related element information.

In other words, when the (extended) request element is present in the frame body of the probe request frame, no (extended) request element is present in the per-STA profile subelement of the probe request variant multi-link element carried in the probe request frame, and in the STA control field in the per-STA profile subelement, complete profile is set to 0 and critical update requested is set to 1, it indicates that a STA is not allowed to request additional specific element information while requesting the critical update-related element information.

Fourth, when the transmitter device needs to request only the critical update-related element information, in a per-STA profile subelement of the probe request variant multi-link element carried in the probe request frame sent by the transmitter device, complete profile is set to 0 and critical update requested is set to 1, and no (extended) request element should be present.

In other words, when a STA in a non-AP MLD sends the probe request frame to an AP in an AP MLD, and in a STA control field in a per-STA profile subelement of the probe request variant multi-link element carried in the probe request frame, complete profile is set to 0 and critical update requested is set to 1, no (extended) request element in the per-STA profile subelement should be present.

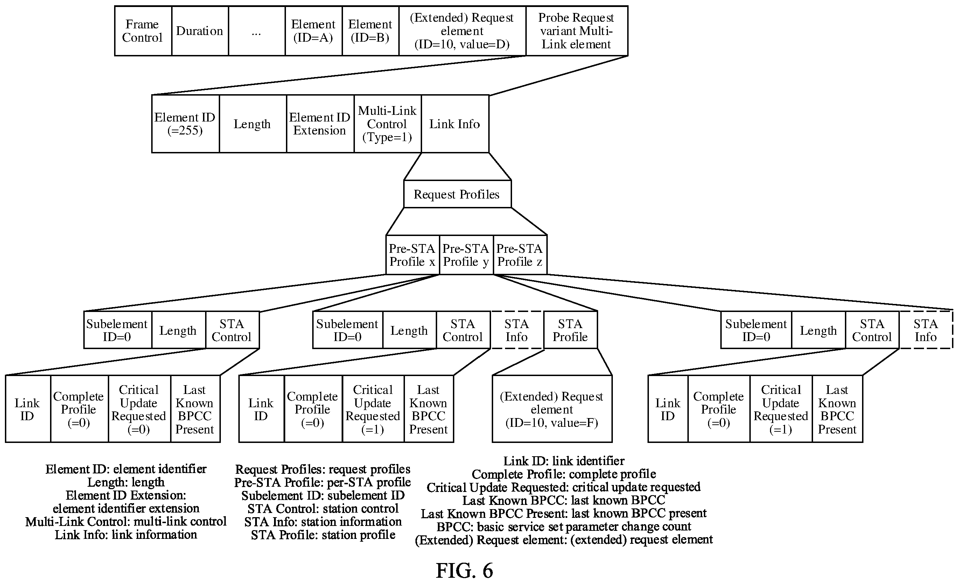

For example, the per-STA profile subelement z of the probe request variant multi-link element in the probe request frame shown in FIG. 4 or FIG. 6 is used as an example. Because complete profile is set to 0 and critical update requested is set to 1, even if the request element included in the frame body indicates that information whose element ID is D needs to be requested, and no (extended) request element is present in a STA profile field in the per-STA profile subelement z, the (extended) request element in the per-STA profile subelement z does not need to be inherited from the frame body. That is, the transmitter device requests only the critical update-related element information, in other words, an AP that receives the probe request frame needs to feed back only critical update-related element information of an AP z.

It may be understood that, in the method in this application, a last known BPCC present subfield in the STA profile field is not described in detail. A specific value of the last known BPCC present subfield is not limited in this embodiment of this application. Optionally, that a value of the critical update requested subfield in this embodiment of this application is the second value includes: The value of the critical update requested subfield is the second value, and a value of the last known BPCC present subfield is a third value. A specific value of the third value is not limited in this embodiment of this application. For example, the second value may be the same as or different from the third value. Optionally, whether the last known BPCC present subfield is present is not limited in this embodiment of this application. For example, if the last known BPCC present subfield is not present, the STA control field in FIG. 3 may include a link ID subfield, a complete profile subfield, and a critical update requested subfield.

In a possible implementation, the probe request variant multi-link element further includes second link information. The second link information includes a first subfield and a second subfield. When the first subfield is a first value, the second subfield is a second value, and the second link information includes an (extended) request element, the second link information indicates to request critical update-related element information of a second link and element information requested by a request element in the second link information. For descriptions of the first subfield and the second subfield, refer to the foregoing descriptions. Details are not described herein again. The foregoing implementation may be further understood as that, when the (extended) request element is present in the frame body of the probe request frame, an (extended) request element is present in a per-STA profile subelement of the probe request variant multi-link element carried in the probe request frame, and in a STA control field in the per-STA profile subelement, complete profile is set to 0 and critical update requested is set to 1, it indicates that the transmitter device (for example, the non-AP MLD or the STA) needs to request, based on the (extended) request element, specific element information other than the critical update-related element information from the AP corresponding to the per-STA profile subelement.

For example, when a per-STA profile subelement of the probe request variant multi-link element carried in the probe request frame includes an (extended) request element, complete profile is set to 0, and critical update requested is set to 1, it indicates that the transmitter device (for example, the non-AP MLD or the STA) needs to request, based on the (extended) request element, specific element information other than the critical update-related element information from an AP corresponding to the per-STA profile subelement. It may be understood that the per-STA profile subelement of the probe request variant multi-link element described herein may be understood as the second link information described in this embodiment of this application, and the AP corresponding to the per-STA profile subelement may be understood as a second AP. It may be understood that for descriptions of the second link and the second AP, refer to the foregoing description. Details are not described herein again.

Optionally, the (extended) request element included in the frame body of the probe request frame may be the same as or different from the (extended) request element included in the second link information. However, regardless of whether the request element included in the frame body of the probe request frame may be the same as the request element included in the second link information, element information of the second AP is fed back based on the element information requested in the (extended) request element of the second link information and the critical update-related element information. FIG. 6 is a schematic diagram of a structure of the probe request frame according to an embodiment of this application. As shown in FIG. 6, for a per-STA profile subelement y, profile complete profile is set to 0, critical update requested is set to 1, and a STA profile of the per-STA profile subelement y includes an (extended) request element. When complete profile is set to 0, it indicates that the STA needs to request partial information of a corresponding link (namely, a link identified by a link ID in the per-STA profile y). When critical update requested is set to 1, it indicates that the STA needs to request critical update-related element information. When the STA profile field of the per-STA profile subelement y includes the (extended) request element, it indicates that the STA needs to request element information whose element ID is F. Therefore, for an AP y, the STA needs to request the critical update-related element information, and needs to request the information whose element ID is F (which is inconsistent with the frame body and therefore is present in the STA profile field of the per-STA profile subelement y). It may be understood that for other descriptions of FIG. 6, refer to the description of FIG. 4. Details are not described herein again.

In a possible implementation, the probe request variant multi-link element further includes third link information. The third link information includes a first subfield and a second subfield. When the first subfield is a first value, the second subfield is a first value, and the third link information includes no (extended) request element, the third link information indicates that the (extended) request element in the third link information is inherited from the frame body of the probe request frame. For example, the value of the second subfield is the first value, to indicate that critical update-related element information of a third link does not need to be requested.

The foregoing implementation may be further understood as that, when the (extended) request element is present in the frame body of the probe request frame, no (extended) request element is present in a per-STA profile subelement of the probe request variant multi-link element carried in the probe request frame, and in a STA control field in the per-STA profile subelement, complete profile is set to 0 and critical update requested is set to 0, the (extended) request element corresponding to the per-STA profile subelement is inherited from the frame body of the probe request frame.

As shown in FIG. 6, for a per-STA profile subelement x, complete profile is set to 0, and critical update requested is set to 0. When complete profile is set to 0, it indicates that the STA needs to request partial information of a corresponding link (namely, a link identified by a link ID in the per-STA profile x). When critical update requested is set to 0, it indicates that the STA does not need to request critical update-related element information. When the frame body includes the (extended) request element, complete profile is set to 0, and the per-STA profile x includes no (extended) request element, it indicates that the (extended) request element in the per-STA profile subelement x needs to be inherited from the frame body. Therefore, for an AP x, the STA needs to request information, whose element ID is D (namely, partial information), of the AP x, and does not need to request the critical update-related element information. It may be understood that for other descriptions of FIG. 6, refer to the description of FIG. 4. Details are not described herein again.

502: The transmitter device sends the probe request frame to a receiver device. Correspondingly, the receiver device receives the probe request frame.

503: The receiver device generates a probe response frame based on the probe request frame.

The receiver device may generate the probe response frame based on the probe request variant multi-link element in the probe request frame. For example, the receiver device may feed back element information of the first AP based on the requested critical update-based element information of the first link that is indicated by the first link information. For another example, the receiver device may further feed back element information of the second AP based on content indicated by the second link information. For another example, the receiver device may further feed back element information of a third AP based on content indicated by the third link information.

504: The receiver device sends the probe response frame to the transmitter device.

It may be understood that the method shown in FIG. 5 may alternatively be replaced with:

A transmitter device generates a probe request frame. The probe request frame includes a probe request variant multi-link element. The probe request variant multi-link element includes second link information. The second link information includes a first subfield and a second subfield. When the first subfield is a first value, the second subfield is a second value, and the second link information includes an (extended) request element, the second link information indicates to request critical update-related element information of the second link and element information requested by the request element in the second link information.

Optionally, the probe request variant multi-link element further includes the first link information. Optionally, the probe request variant multi-link element further includes the third link information.

It may be understood that for descriptions of the first link information, the second link information, the third link information, or the like, refer to the foregoing descriptions. Details are not described herein again.

It may be understood that the probe request frame described in this application may also be referred to as a multi-link probe request frame.

According to the method provided in this embodiment of this application, the transmitter device can clearly indicate, to the corresponding AP, that the transmitter device needs to request element information the same as the frame body or the critical update-related element information. In addition, the corresponding AP can effectively learn that the corresponding AP needs to feed back the element information the same as the frame body or the critical update-related element information. This effectively solves a problem that the transmitter device and the receiver device may differently interpret link information, and further improves information exchange efficiency.

FIG. 7 is a schematic flowchart of another multi-link communication-based probe request method according to an embodiment of this application. As shown in FIG. 7, the method includes the following steps.

701: A transmitter device generates a probe request frame. The probe request frame includes a probe request variant multi-link element. The probe request variant multi-link element includes first link information. The first link information includes a first subfield and a second subfield. When a value of the first subfield is a first value, a value of the second subfield is a second value, the first link information includes a request element, and a value of a first field in the request element is a special value, the first link information indicates to request critical update-related element information of a first link.

It may be understood that in this embodiment of this application, for descriptions of the first subfield, the second subfield, the first value, the second value, and the first link information, refer to the method shown in FIG. 5. Details are not described herein again. For example, the description of the first link information shown in FIG. 5 is also applicable to the method shown in FIG. 7. For example, in this embodiment of this application, the value of the first subfield is the first value, to indicate to request partial information about the first link. For another example, the value of the second subfield is the second value, to indicate to request the critical update-related element information of the first link.

For example, the request element may include at least one of a request element (namely, a common request element) shown in FIG. 2b or an extended request element (namely, an extended request element) shown in FIG. 2c. For example, a frame body of the probe request frame includes a request element or an extended request element, and the first link information includes a request element or an extended request element. It may be understood that the request element described in this embodiment of this application may be understood as the (extended) request element described above.

In a possible implementation, the first field includes any one or more of a length field, a requested element identifier field, an element identifier extension field, or a requested element identifier extension field. For example, a value of a length field in the request element is a special value. For another example, a value of a requested element identifier field in the request element is a special value. For another example, a value of a length field in the extended request element is a special value. For another example, a value of a requested element identifier field or a requested element identifier extension field in the extended request element is a special value. It may be understood that the special value described in this embodiment of this application may indicate that the (extended) request element is an empty (extended) request element.

For example, the request element includes a length field. For example, a value of the length field in the request element may be a special value, for example, the special value is 0. For another example, the request element further includes a requested element identifier field. For example, an ID of the requested element identifier field is a special value. For example, the value of the length field is 1, and the ID of the requested element identifier field is a reserved (reserved) value, for example, any one of 245 to 254. If the ID of the requested element identifier field is any one of 245 to 254, it indicates that an element corresponding to the ID of the requested element identifier field is empty.

For example, the extended request element includes a length field, an element identifier extension field, and a requested element identifier field. For example, a value of the length field in the request element is a special value, for example, the special value is 2. For another example, an ID of the requested element identifier field is a reserved value, for example, any one of 245 to 254. If the ID of the requested element identifier field is any one of 245 to 254, it indicates that an element corresponding to the ID of the requested element identifier field is empty (the element corresponding to the ID of the requested element identifier field may also be referred to as the reserved value).

For example, the extended request element includes a length field, an element identifier extension field, a requested element identifier field, and a requested element identifier extension field. In this case, for example, IDs corresponding to the requested element identifier field and the requested element identifier extension field are reserved values.

It may be understood that a value of the element identifier extension field is not limited in this embodiment of this application.

In a possible implementation, the frame body of the probe request frame includes the (extended) request element.

For example, when the (extended) request element is present in the frame body of the probe request frame, an (extended) request element is present in a per-STA profile subelement of the probe request variant multi-link element carried in the probe request frame, and in a STA control field in the per-STA profile subelement, complete profile is set to 0 and critical update requested is set to 1, if the (extended) request element in the per-STA profile subelement meets one of the following two cases, it indicates that the transmitter device (for example, a STA or a non-AP MLD) does not need to request, based on the (extended) request element, specific element information (element information) other than the critical update-related element information from an AP corresponding to the per-STA profile subelement.
1. If the (extended) request element is a request element, length is set to 0.
2. If the (extended) request element is an extended request element, length is set to 2.

For example, if the (extended) request element meets one of the foregoing two cases, it indicates that the transmitter device does not need to request, based on the (extended) request element, specific element information (element information) other than the critical update-related element information from the AP corresponding to the per-STA profile subelement. For example, when the value of the length field in the (extended) request element is the special value, it indicates that the (extended) request element is an empty (extended) request element. If the (extended) request element does not meet the foregoing two cases, it indicates that the transmitter device needs to request, based on the (extended) request element, specific element information (element information) other than the critical update-related element information from the AP corresponding to the per-STA profile subelement.

For another example, when the (extended) request element is present in the frame body of the probe request frame, an (extended) request element is present in a per-STA profile subelement of the probe request variant multi-link element carried in the probe request frame, and in a STA control field in the per-STA profile subelement, complete profile is set to 0 and critical update requested is set to 1, if the (extended) request element in the per-STA profile subelement meets one of the following two cases, it indicates that a STA does not need to request, based on the (extended) request element, specific element information (element information) other than the critical update-related element information from an AP corresponding to the per-STA profile subelement.
1. If the (extended) request element is a request element, length is set to 0 or length is set to 1, and the ID of the requested element identifier field is the reserved value.
2. If the (extended) request element is an extended request element, length is set to 2, and the ID of the requested element identifier field is the reserved value; or length is set to 3, and the IDs corresponding to the requested element identifier field and the requested element identifier extension field are the reserved values. The probe request variant multi-link element described in this embodiment of this application may maintain an inheritance rule. The per-STA profile subelement is allowed to carry an empty (extended) request element. This effectively improves two interpretations generated when no (extended) request element is present in a case in which complete profile is set to 0 and critical update requested is set to 1.

In a possible implementation, the probe request variant multi-link element further includes second link information. The second link information includes a first subfield and a second subfield. When the first subfield is a first value, the second subfield is a second value, and the second link information includes an (extended) request element, the second link information indicates to request critical update-related element information of a second link and element information requested by the request element in the second link information.

In a possible implementation, the probe request variant multi-link element further includes third link information. The third link information includes a first subfield and a second subfield. When the first subfield is a first value, the second subfield is a third value, and the third link information includes no (extended) request element, the third link information indicates that the (extended) request element in the third link information is inherited from a frame body of the probe request frame. For example, the third value indicates that critical update-related element information of a third link does not need to be requested. It may be understood that a value relationship between the first value, the second value, and the third value is not limited in this embodiment of this application.

It may be understood that for specific descriptions of the second link information and the third link information, refer to FIG. 5 or FIG. 6. Details are not described herein again.

702: The transmitter device sends the probe request frame to a receiver device. Correspondingly, the receiver device receives the probe request frame.

703: The receiver device generates a probe response frame based on the probe request frame.

The receiver device may generate the probe response frame based on the probe request variant multi-link element in the probe request frame. For example, the receiver device may feed back element information of a first AP based on the requested critical update-based element information of the first link that is indicated by the first link information. For another example, the receiver device may further feed back element information of a second AP based on content indicated by the second link information. For another example, the receiver device may further feed back element information of a third AP based on content indicated by the third link information.

704: The receiver device sends the probe response frame to the transmitter device.

It may be understood that the probe request frame described in this application may also be referred to as a multi-link probe request frame.

According to the method provided in this embodiment of this application, the transmitter device can clearly indicate, to the corresponding AP, that the transmitter device needs to request element information the same as the frame body or the critical update-related element information. In addition, the corresponding AP can effectively learn that the corresponding AP needs to feed back the element information the same as the frame body or the critical update-related element information. This effectively solves a problem that the transmitter device and the receiver device may differently interpret link information, and further improves information exchange efficiency.

The following describes communication apparatuses provided in embodiments of this application.

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 8 to FIG. 10.

FIG. 8 is a schematic diagram of a structure of a communication apparatus according to an embodiment of this application. As shown in FIG. 8, the communication apparatus includes a processing unit 801 and a transceiver unit 802.

In some embodiments of this application, the communication apparatus may be a transmitter device, a chip in the transmitter device, or the like described above. In other words, the communication apparatus may be configured to perform a step or a function performed by the transmitter device in the method embodiments.

For example, the processing unit 801 is configured to generate a probe request frame, where the probe request frame includes a probe request variant multi-link element, the probe request variant multi-link element includes first link information, the first link information includes a first subfield and a second subfield, when a value of the first subfield is a first value, a value of the second subfield is a second value, and a frame body of the probe request frame includes a request element, but the first link information includes no request element, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link.

The transceiver unit 802 is configured to send the probe request frame.

In a possible implementation, the probe request variant multi-link element further includes at least one of second link information or third link information.

For example, the processing unit 801 is configured to generate a probe request frame, where the probe request frame includes a probe request variant multi-link element (probe request variant multi-link element), the probe request variant multi-link element includes second link information, the second link information includes a first subfield and a second subfield, when a value of the first subfield is a first value, a value of the second subfield is a second value, a frame body of the probe request frame includes a request element, and the second link information includes a request element, the second link information indicates to request critical update-related element information of a second link and element information requested by the request element in the second link information, the value of the first subfield is the first value, to indicate to request partial information about a first link, the value of the second subfield is the second value, to indicate to request critical update-related element information of the first link, and the second link information corresponds to the second link.

The transceiver unit 802 is configured to send the probe request frame.

In a possible implementation, the probe request variant multi-link element further includes at least one of first link information or third link information.

For example, the processing unit 801 is configured to generate a probe request frame, where the probe request frame includes a probe request variant multi-link element, the probe request variant multi-link element includes first link information, the first link information includes a first subfield and a second subfield, when a value of the first subfield is a first value, a value of the second subfield is a second value, the first link information includes a request element, and a value of a first field in the request element is a special value, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link.

The transceiver unit 802 is configured to send the probe request frame.

In a possible implementation, the probe request variant multi-link element further includes at least one of second link information or third link information.

In this embodiment of this application, for descriptions of the probe request variant multi-link element, the first link information, the second link information, the third link information, the first subfield, the second subfield, the request element, the critical update-related element information, or the like, refer to the descriptions in the foregoing method embodiments (including FIG. 5, FIG. 7, or the like). Details are not described herein again.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein again.

FIG. 8 is reused. In some other embodiments of this application, the communication apparatus may be the receiver device, the chip in the receiver device, or the like described above. In other words, the communication apparatus may be configured to perform a step or a function performed by the receiver device in the method embodiments.

For example, the transceiver unit 802 is configured to receive a probe request frame, where the probe request frame includes a probe request variant multi-link element, the probe request variant multi-link element includes first link information, the first link information includes a first subfield and a second subfield, when a value of the first subfield is a first value, a value of the second subfield is a second value, and a frame body of the probe request frame includes a request element, but the first link information includes no request element, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link.

The processing unit 801 is configured to generate a probe response frame based on the probe request frame.

The transceiver unit 802 is further configured to send the probe response frame.

In a possible implementation, the probe request variant multi-link element further includes at least one of second link information or third link information.

For example, the transceiver unit 802 is configured to receive a probe request frame, where the probe request frame includes a probe request variant multi-link element (probe request variant multi-link element), the probe request variant multi-link element includes second link information, the second link information includes a first subfield and a second subfield, when a value of the first subfield is a first value, a value of the second subfield is a second value, a frame body of the probe request frame includes a request element, and the second link information includes a request element, the second link information indicates to request critical update-related element information of a second link and element information requested by the request element in the second link information, the value of the first subfield is the first value, to indicate to request partial information about a first link, the value of the second subfield is the second value, to indicate to request critical update-related element information of the first link, and the second link information corresponds to the second link.

The processing unit 801 is configured to generate a probe response frame based on the probe request frame.

The transceiver unit 802 is further configured to send the probe response frame.

In a possible implementation, the probe request variant multi-link element further includes at least one of first link information or third link information.

For example, the transceiver unit 802 is configured to receive a probe request frame, where the probe request frame includes a probe request variant multi-link element, the probe request variant multi-link element includes first link information, the first link information includes a first subfield and a second subfield, when a value of the first subfield is a first value, a value of the second subfield is a second value, the first link information includes a request element, and a value of a first field in the request element is a special value, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link.

The processing unit 801 is configured to generate a probe response frame based on the probe request frame.

The transceiver unit 802 is further configured to send the probe response frame.

In a possible implementation, the probe request variant multi-link element further includes at least one of second link information or third link information.

In this embodiment of this application, for descriptions of the probe request variant multi-link element, the first link information, the second link information, the third link information, the first subfield, the second subfield, the request element, the critical update-related element information, or the like, refer to the descriptions in the foregoing method embodiment (including FIG. 5, FIG. 7, or the like). Details are not described herein again.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein again.

The transmitter device and the receiver device in this embodiment of this application are described above. The following describes possible product forms of the transmitter device and the receiver device. It should be understood that a product in any form that has the functions of the transmitter device in FIG. 8 and a product in any form that has the functions of the receiver device in FIG. 8 fall within the protection scope of embodiments of this application. It should further be understood that the following descriptions are merely examples, and do not limit product forms of the transmitter device and the receiver device in this embodiment of this application.

In a possible implementation, in the communication apparatus shown in FIG. 8, the processing unit 801 may be one or more processors. The transceiver unit 802 may be a transceiver, or the transceiver unit 802 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A connection manner between the processor and the transceiver is not limited in embodiments of this application.

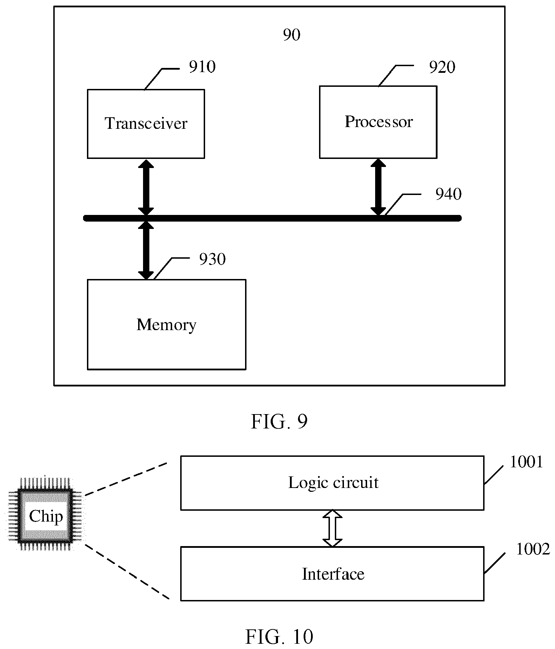

As shown in FIG. 9, a communication apparatus 90 includes one or more processors 920 and a transceiver 910.

For example, when the communication apparatus is configured to perform the step, the method, or the function performed by the transmitter device, the processor 920 is configured to generate a probe request frame; and the transceiver 910 is configured to send the probe request frame.

For example, when the communication apparatus is configured to perform the step, the method, or the function performed by the receiver device, the transceiver 910 is configured to receive a probe request frame; the processor 920 is configured to generate a probe response frame based on the probe request frame; and the transceiver 910 is configured to send the probe response frame.

In this embodiment of this application, for descriptions of a probe request variant multi-link element, first link information, second link information, third link information, a first subfield, a second subfield, a request element, critical update-related element information, or the like, refer to the descriptions in the foregoing method embodiments (including FIG. 5, FIG. 7, or the like). Details are not described herein again. It may be understood that for specific descriptions of the processor and the transceiver, refer to descriptions of the processing unit and the transceiver unit shown in FIG. 8. Details are not described herein again.

In each implementation of the communication apparatus shown in FIG. 9, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 90 may further include one or more memories 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930.

In this embodiment of this application, a specific connection medium between the transceiver 910, the processor 920 and the memory 930 is not limited. In this embodiment of this application, in FIG. 9, the memory 930, the processor 920, and the transceiver 910 are connected to each other through a bus 940. The bus is represented by a thick line in FIG. 9. A manner of connection between other components is merely described as an example, but is not limited thereto. The bus may be classified into an address bus, a data bus, a control bus, or the like. For ease of representation, only one thick line is used to represent the bus in FIG. 9, but this does not mean that there is only one bus or only one type of bus.

In this embodiment of this application, the processor may be a general-purpose processor, a digital signal processor, an application-specific integrated circuit, a field-programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and accomplished by a hardware processor, or may be performed and accomplished by using a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

The processor 920 is mainly configured to process a communication protocol and communication data, control the entire communication apparatus, execute a software program, and process data of the software program. The memory 930 is mainly configured to store the software program and data. The transceiver 910 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 920 may read the software program in the memory 930, interpret and execute instructions of the software program, and process data of the software program. When data needs to be sent wirelessly, the processor 920 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 920. The processor 920 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may further include more components or the like than those shown in FIG. 9. This is not limited in this embodiment of this application. The methods performed by the processor and the transceiver are merely examples. For specific steps performed by the processor and the transceiver, refer to the methods described above.

In another possible implementation, in the communication apparatus shown in FIG. 8, the processing unit 801 may be one or more logic circuits, and the transceiver unit 802 may be an input/output interface, which is also referred to as a communication interface, an interface circuit, an interface, or the like. Alternatively, the transceiver unit 802 may be a sending unit and a receiving unit. The sending unit may be an output interface, and the receiving unit may be an input interface. The sending unit and the receiving unit are integrated into one unit, for example, an input/output interface. As shown in FIG. 10, a communication apparatus shown in FIG. 10 includes a logic circuit 1001 and an interface 1002. In other words, the processing unit 801 may be implemented by the logic circuit 1001, and the transceiver unit 802 may be implemented by the interface 1002. The logic circuit 1001 may be a chip, a processing circuit, an integrated circuit, a system on chip (system on chip, SoC), or the like. The interface 1002 may be a communication interface, an input/output interface, a pin, or the like. For example, FIG. 10 is an example in which the communication apparatus is a chip. The chip includes the logic circuit 1001 and the interface 1002.

In this embodiment of this application, the logic circuit may further be coupled to the interface. A specific connection manner of the logical circuit and the interface is not limited in this embodiment of this application.

For example, when the communication apparatus is configured to perform the method, the function, or the step performed by the transmitter device, the logic circuit 1001 is configured to generate a probe request frame, and the interface 1002 is configured to output the probe request frame.

For example, when the communication apparatus is configured to perform the method, the function, or the step performed by the receiver device, the interface 1002 is configured to input a probe request frame; the logic circuit 1001 is configured to generate a probe response frame based on the probe request frame; and the interface 1002 is configured to output the probe response frame.

It may be understood that the communication apparatus in this embodiment of this application may implement the method provided in embodiments of this application in a form of hardware or in a form of software. This is not limited in embodiments of this application.

In this embodiment of this application, for descriptions of a probe request variant multi-link element, first link information, second link information, third link information, a first subfield, a second subfield, a request element, critical update-related element information, or the like, refer to the descriptions in the foregoing method embodiments (including FIG. 5, FIG. 7, or the like). Details are not described herein again.

For specific implementations of embodiments shown in FIG. 10, refer to the foregoing embodiments. Details are not described herein again.

An embodiment of this application further provides a wireless communication system. The wireless communication system includes a transmitter device and a receiver device. The transmitter device and the receiver device may be configured to perform the method in any embodiment (for example, FIG. 5 or FIG. 7).

In addition, this application further provides a computer-readable storage medium. The computer-readable storage medium stores computer code. When the computer code is run on a computer, the computer is enabled to perform operations and/or processing performed by the transmitter device in the method provided in this application.

This application further provides a computer-readable storage medium. The computer-readable storage medium stores computer code When the computer code is run on a computer, the computer is enabled to perform operations and/or processing performed by the receiver device in the method provided in this application.

This application further provides a computer program product. The computer program product includes computer code or a computer program. When the computer code or the computer program is run on a computer, an operation and/or processing performed by the transmitter device in the method provided in this application are/is performed.

This application further provides a computer program product. The computer program product includes computer code or a computer program. When the computer code or the computer program is run on a computer, an operation and/or processing performed by the receiver device in the method provided in this application are/is performed.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the technical effect of the solutions provided in embodiments in this application.

In addition, functional units in embodiments of this application may be integrated into one processing unit, each of the functional units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-link communication-based probe request method, wherein the method comprises:
generating, by a transmitter device, a probe request frame, wherein the probe request frame comprises a probe request variant multi-link element, the probe request variant multi-link element comprises first link information, the first link information comprises a first subfield and a second subfield, when a value of the first subfield is a first value, a value of the second subfield is a second value, and a frame body of the probe request frame comprises a request element, but the first link information comprises no request element, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link; and
sending, by the transmitter device, the probe request frame.

2. A multi-link communication-based probe request method, wherein the method comprises:
receiving, by a receiver device, a probe request frame, wherein the probe request frame comprises a probe request variant multi-link element, the probe request variant multi-link element comprises first link information, the first link information comprises a first subfield and a second subfield, when a value of the first subfield is a first value, a value of the second subfield is a second value, and a frame body of the probe request frame comprises a request element, but the first link information comprises no request element, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link; and
generating, by the receiver device, a probe response frame based on the probe request frame, and sending the probe response frame.

3. The method according to claim 1 or 2, wherein the request element comprises at least one of a common request element or an extended request element.

4. The method according to any one of claims 1 to 3, wherein the probe request variant multi-link element further comprises second link information, the second link information comprises a first subfield and a second subfield, when a value of the first subfield is the first value, a value of the second subfield is the second value, and the second link information comprises a request element, the second link information indicates to request critical update-related element information of a second link and element information requested by the request element in the second link information, and the second link information corresponds to the second link.

5. The method according to any one of claims 1 to 4, wherein the probe request variant multi-link element further comprises third link information, the third link information comprises a first subfield and a second subfield, when a value of the first subfield is the first value, a value of the second subfield is the first value, and the third link information comprises no request element, the third link information indicates that requested element information of a third link is inherited from the frame body of the probe request frame, the value of the second subfield is the first value, to indicate not to request critical update-related element information of the third link, and the third link information corresponds to the third link.

6. A multi-link communication-based probe request method, wherein the method comprises:
generating, by a transmitter device, a probe request frame, wherein the probe request frame comprises a probe request variant multi-link element, the probe request variant multi-link element comprises first link information, the first link information comprises a first subfield and a second subfield, when a value of the first subfield is a first value, a value of the second subfield is a second value, the first link information comprises a request element, and a value of a first field in the request element is a special value, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link; and
sending, by the transmitter device, the probe request frame.

7. A multi-link communication-based probe request method, wherein the method comprises:
receiving, by a receiver device, a probe request frame, wherein the probe request frame comprises a probe request variant multi-link element, the probe request variant multi-link element comprises first link information, the first link information comprises a first subfield and a second subfield, when a value of the first subfield is a first value, a value of the second subfield is a second value, the first link information comprises a request element, and a value of a first field in the request element is a special value, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link; and
generating, by the receiver device, a probe response frame based on the probe request frame, and sending the probe response frame.

8. The method according to claim 6 or 7, wherein the request element comprises at least one of a common request element or an extended request element.

9. The method according to any one of claims 6 to 8, wherein the first field comprises any one or more of a length field, a requested element identifier field, an element identifier extension field, or a requested element identifier extension field.

10. The method according to any one of claims 6 to 9, wherein a frame body of the probe request frame comprises a request element.

11. A communication apparatus, wherein the apparatus comprises:
a processing unit, configured to generate a probe request frame, wherein the probe request frame comprises a probe request variant multi-link element, the probe request variant multi-link element comprises first link information, the first link information comprises a first subfield and a second subfield, when a value of the first subfield is a first value, a value of the second subfield is a second value, and a frame body of the probe request frame comprises a request element, but the first link information comprises no request element, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link; and
a transceiver unit, configured to send the probe request frame.

12. A communication apparatus, wherein the apparatus comprises:
a transceiver unit, configured to receive a probe request frame, wherein the probe request frame comprises a probe request variant multi-link element, the probe request variant multi-link element comprises first link information, the first link information comprises a first subfield and a second subfield, when a value of the first subfield is a first value, a value of the second subfield is a second value, and a frame body of the probe request frame comprises a request element, but the first link information comprises no request element, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link; and
a processing unit, configured to generate a probe response frame based on the probe request frame, wherein
the transceiver unit is further configured to send the probe response frame.

13. The apparatus according to claim 11 or 12, wherein the request element comprises at least one of a common request element or an extended request element.

14. The apparatus according to any one of claims 11 to 13, wherein the probe request variant multi-link element further comprises second link information, the second link information comprises a first subfield and a second subfield, when a value of the first subfield is the first value, a value of the second subfield is the second value, and the second link information comprises a request element, the second link information indicates to request critical update-related element information of a second link and element information requested by the request element in the second link information, and the second link information corresponds to the second link.

15. The apparatus according to any one of claims 11 to 14, wherein the probe request variant multi-link element further comprises third link information, the third link information comprises a first subfield and a second subfield, when a value of the first subfield is the first value, a value of the second subfield is the first value, and the third link information comprises no request element, the third link information indicates that requested element information of a third link is inherited from the frame body of the probe request frame, the value of the second subfield is the first value, to indicate not to request critical update-related element information of the third link, and the third link information corresponds to the third link.

16. A communication apparatus, wherein the apparatus comprises:
a processing unit, configured to generate a probe request frame, wherein the probe request frame comprises a probe request variant multi-link element, the probe request variant multi-link element comprises first link information, the first link information comprises a first subfield and a second subfield, when a value of the first subfield is a first value, a value of the second subfield is a second value, the first link information comprises a request element, and a value of a first field in the request element is a special value, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link; and
a transceiver unit, configured to send the probe request frame.

17. A communication apparatus, wherein the apparatus comprises:
a transceiver unit, configured to receive a probe request frame, wherein the probe request frame comprises a probe request variant multi-link element, the probe request variant multi-link element comprises first link information, the first link information comprises a first subfield and a second subfield, when a value of the first subfield is a first value, a value of the second subfield is a second value, the first link information comprises a request element, and a value of a first field in the request element is a special value, the first link information indicates to request critical update-related element information of a first link, the value of the first subfield is the first value, to indicate to request partial information about the first link, the value of the second subfield is the second value, to indicate to request the critical update-related element information of the first link, and the first link information corresponds to the first link; and
a processing unit, configured to generate a probe response frame based on the probe request frame, wherein
the transceiver unit is further configured to send the probe response frame.

18. The apparatus according to claim 16 or 17, wherein the request element comprises at least one of a common request element or an extended request element.

19. The apparatus according to any one of claims 16 to 18, wherein the first field comprises any one or more of a length field, a requested element identifier field, an element identifier extension field, or a requested element identifier extension field.

20. The apparatus according to any one of claims 16 to 19, wherein a frame body of the probe request frame comprises a request element.

21. A communication apparatus, comprising a processor and a memory, wherein
the memory is configured to store computer instructions; and
the processor is configured to execute the computer instructions, to perform the method according to any one of claims 1 to 10.

22. A communication apparatus, comprising a logic circuit and an interface, wherein the logic circuit is coupled to the interface; and
the logic circuit is configured to perform the method according to any one of claims 1 to 10, to obtain processed data; and the interface is configured to output the processed data.

23. A computer-readable storage medium, wherein the computer-readable storage medium is configured to store a computer program or instructions, and when the computer program or the instructions are executed, the method according to any one of claims 1 to 10 is performed.

24. A computer program product, wherein the computer program product stores a computer program or instructions, and when the computer program or the instructions are executed, the method according to any one of claims 1 to 10 is performed.

25. A multi-link communication system, comprising a transmitter device and a receiver device, wherein the transmitter device is configured to perform the method according to any one of claim 1 or claims 3 to 5, and the receiver device is configured to perform the method according to any one of claims 2 to 5; or the transmitter device is configured to perform the method according to any one of claim 6 or claims 8 to 10, and the receiver device is configured to perform the method according to any one of claims 7 to 10.
